# EUROPEAN PATENT APPLICATION

(11) **EP 4 372 725 A1**
(43) Date of publication of application: **22.05.2024**
(21) Application number: 22842099.8
(22) Date of filing: 12.07.2022
(51) Int. Cl.: G09B 23/34, G09B 9/00, G09B 19/00

(54) **CATHETER SIMULATOR AND HEART MODEL FOR CATHETER SIMULATOR**

(30) Priority: 15.07.2021 JP 2021117311
(71) Applicant: OSAKA UNIVERSITY, Suita-shi Osaka 565-0871 (JP); JMC Corporation, Yokohama-shi, Kanagawa 222-0033 (JP)
(72) Inventor: OKAYAMA, Keita, Suita-shi, Osaka 565-0871 (JP); SAKATA, Yasushi, Suita-shi, Osaka 565-0871 (JP); WATANABE, Daichi, Yokohama-shi, Kanagawa 222-0033 (JP); INADA, Makoto, Yokohama-shi, Kanagawa 222-0033 (JP)
(74) Representative: advotec.
(86) International application number: PCT/JP2022/027358
(87) International publication number: WO 2023/286755

(57) **Abstract**

The heart model 100 of the present invention has: a main body 101 formed from an elastic material and including a left atrium 112 and a left ventricle 113, with a mitral valve 140 installed at a boundary portion between the left atrium 112 and the left ventricle 113; and an inferior vena cava 102A provided in the main body. The mitral valve 140 has an anterior leaflet 141 and a posterior leaflet 142, both the leaflets extending toward the left ventricle 113 side and being capable of opening and closing, and the anterior leaflet and the posterior leaflet are each provided on the tip edge with a plurality of string-shaped members 150 extending into the left ventricle 113.

## Description

### TECHNICAL FIELD

The present invention relates to a catheter simulator that enables practice of catheter surgeries mainly for mitral valve insufficiency, and a heart model to be installed in this catheter simulator.

### BACKGROUND ART

It is conventionally known to perform catheter surgeries on patients with heart diseases. The inventors of the present invention have proposed, in Patent Document 1, a plurality of heart models according to the types of heart diseases, and a simulator including a container for holding each heart model and a pump for circulating a stream of water in the container, so as to promote improvement of catheter maneuvers for various heart diseases. This simulator enables practicing maneuvers similar to actual surgeries for various cardiac diseases, by storing water in a small container to float a heart model therein, creating a flow into the heart with a pump to generate a pulsatile flow, inserting a catheter into the floating heart model, and manipulating the catheter. In the Patent Document 1, a heart model and a container are disclosed, with which transcatheter aortic valve implantation (TAVI) can be simulated as a surgical technique for treating a heart valve disease.

### CITATION LIST

### PATENT DOCUMENT

Patent Document 1: PCT/JP2016/057000

### SUMMARY OF THE INVENTION

### PROBLEM TO BE SOLVED BY THE INVENTION

There are four valves (pulmonary valve, aortic valve, mitral valve, and tricuspid valve) in the heart, and the simulator disclosed in Patent Document 1 can be used to practice a catheter surgery related to an aortic valve disease as a heart valve disease; however, the simulator cannot be used to practice a catheter surgery for the mitral valve. The mitral valve accomplishes a function of maintaining a blood flow from the left atrium to the left ventricle and preventing backflow, and when the blood flow in the heart, the configuration of the mitral valve, the movement, and the like are taken into consideration, it is not adequate to employ the heart models and the container disclosed in the above-described Patent Document 1.

In addition, as will be described below, the mitral valve is configured such that the blood flow is controlled by close contact and separation of the anterior leaflet and the posterior leaflet curved toward the left ventricle side. When valvular insufficiency (mitral valve insufficiency) occurs in this mitral valve, close contact between the anterior leaflet and the posterior leaflet occurs insufficiently, causing a problem of backflow of blood. Recently, a percutaneous mitral valve clipping technique (a surgical technique using MITRACLIP (registered trademark)) is carried out as a catheter treatment for such mitral valve insufficiency. In this percutaneous mitral valve clipping technique, a clip is installed at a tip of a catheter, the catheter is approached to the left ventricle through the left atrium, and the clip is fitted so as to grasp the anterior leaflet and the posterior leaflet. When the clip is fitted between the anterior leaflet and the posterior leaflet, the state of close contact of the mitral valve causing valvular insufficiency is ameliorated, and the backflow of blood is suppressed.

The above-described simulator of Patent Document 1 is not intended for the percutaneous mitral valve clipping technique, and it is desirable to provide a heart model and a simulator that can promote the improvement of maneuvers for such a catheter surgery as well. In addition, regarding a heart model, it is not easy to accurately reproduce the movement of close contact and separation of the mitral valve with a simple configuration, and as long as a movement similar to that of the actual mitral valve is not reproduced, it is difficult to accurately train the percutaneous mitral valve clipping technique.

The present invention was achieved in view of the actual circumstances, and it is an object of the invention to provide a heart model with which training of manipulations to treat a heart valve disease related to the mitral valve using a catheter can be conveniently carried out in a state conforming to the actual movement of the mitral valve, and a catheter simulator in which such a heart model is installed.

### MEANS FOR SOLVING PROBLEM

In order to achieve the above-described object, the heart model according to the present invention includes: a main body formed from an elastic material and including a left atrium and a left ventricle, with a mitral valve installed at a boundary portion between the left atrium and the left ventricle; and a vena cava provided in the main body, in which the mitral valve has an anterior leaflet and a posterior leaflet, both the leaflets extending toward the left ventricle side and capable of opening and closing, and the anterior leaflet and the posterior leaflet are each provided on the tip side with a plurality of string-shaped members extending into the left ventricle.

In addition, the catheter simulator according to the present invention has: a container including a holding part for holding the above-described heart model in a state of being filled with a liquid; a pump connected to the container and circulating the liquid in the container into the heart model; and an introduction part provided in the container and enabling insertion of a catheter, in which the pump is intermittently driven so that a pulsatile flow flows from the left atrium toward the left ventricle in the heart model held in the container, and catheter surgeries on the mitral valve using a catheter can be practiced against the anterior leaflet and the posterior leaflet of the heart model held by the holding part.

The heart model of the above-described configuration can be installed in a state of floating inside the container of the catheter simulator filled with a liquid such as water, and then catheter surgeries on the mitral valve can be practiced. Since the mitral valve has an anterior leaflet and a posterior leaflet, both the leaflets extending toward the left ventricle side and capable of opening and closing, and the anterior leaflet and the posterior leaflet are each provided on the tip side with a plurality of string-shaped members extending into the left ventricle, when a liquid flows from the left atrium toward the left ventricle by the pump, the string-shaped members are pulled along the flow. Since a plurality of the string-shaped members are provided on the tip sides of the anterior leaflet and the posterior leaflet constituting the mitral valve, the anterior leaflet and the posterior leaflet are subjected to a pulling action to be separated from each other by the flow, and the mitral valve is opened in the same manner as in the movement of the mitral valve of the actual heart. In addition, when the flow from the left atrium toward the left ventricle is cut off by the pump, the anterior leaflet and the posterior leaflet are not subjected to the pulling action from the string-shaped members and are therefore occluded. In this case, since the anterior leaflet and the posterior leaflet are no longer subjected to the pulling action of the string-shaped members to be in a relaxed state and are subjected to an action of closing from an open state, valvular insufficiency of the mitral valve in the actual heart is reproduced. For this reason, the operation of the mitral valve of the actual heart is easily reproduced with a simple configuration, and catheter surgeries (mainly, percutaneous mitral valve clipping technique) can be practiced against the anterior leaflet and the posterior leaflet.

### EFFECT OF THE INVENTION

According to the heart model and the catheter simulator of the present invention, the training of manipulations for a catheter surgery on a heart valve disease related to the mitral valve can be conveniently carried out in a state conforming to the movement of the actual mitral valve.

### BRIEF DESCRIPTION OF DRAWINGS

Fig. 1 is a diagram illustrating an embodiment of a catheter simulator according to the present invention;
Fig. 2 is a diagram illustrating a container portion of the catheter simulator shown in Fig. 1 as viewed from above;
Fig. 3 is a perspective view illustrating the container portion of the catheter simulator shown in Fig. 1 as viewed from the front;
Fig. 4 is a perspective view illustrating the container portion of the catheter simulator shown in Fig. 1 as viewed from the rear;
Fig. 5 is a schematic diagram illustrating the structure of a general heart;
Fig. 6 is an overall view illustrating an embodiment of a heart model according to the present invention;
Fig. 7 is a plan view illustrating a state in which the heart model shown in Fig. 6 is installed in the container;
Fig. 8 is a plan view illustrating a mitral valve of an actual heart as viewed from the left atrium side;
Fig. 9(a) is a diagram illustrating a state in which the mitral valve is opened, and blood flows from the left atrium to the left ventricle, and Fig. 9(b) is a diagram illustrating the state in which the mitral valve that should originally close does not close (mitral valve insufficiency state);
Fig. 10 is a diagram illustrating a holder to which the mitral valve (anterior leaflet and posterior leaflet) is attached;
Fig. 11 is a diagram illustrating a state in which the anterior leaflet of the mitral valve is mounted on the holder of Fig. 10 (diagram as viewed from the left atrium side);
Fig. 12 is a diagram illustrating a state in which the posterior leaflet of the mitral valve is mounted on the holder of Fig. 10 (diagram as viewed from the left atrium side);
Fig. 13 is a diagram illustrating a state in which the anterior leaflet and the posterior leaflet of the mitral valve are mounted on the holder of Fig. 10 (diagram as viewed from the left atrium side);
Fig. 14 is a diagram illustrating a state in which the anterior leaflet and the posterior leaflet of the mitral valve are mounted on the holder of Fig. 10 (diagram as viewed from the left ventricle side);
Fig. 15 is a diagram illustrating a state in which the mitral valve (mitral valve model) shown in Fig. 14 is installed in a heart model;
Fig. 16 is a plan view illustrating a state in which a heart model mounted with a mitral valve is attached to the container;
Fig. 17 is a diagram illustrating a mitral valve to which string-shaped members are attached as viewed from the nozzle side;
Fig. 18 is a diagram illustrating a state in which when subjected to a sucking action of a liquid, the string-shaped members flow, causing the mitral valve to open; and
Fig. 19 is a schematic diagram illustrating a state in which a catheter is inserted into a mitral valve with valvular insufficiency, and an approximately central portion of the mitral valve is clipped.

### MODE(S) FOR CARRYING OUT THE INVENTION

Embodiments of the present invention will be described below with reference to the attached drawings.

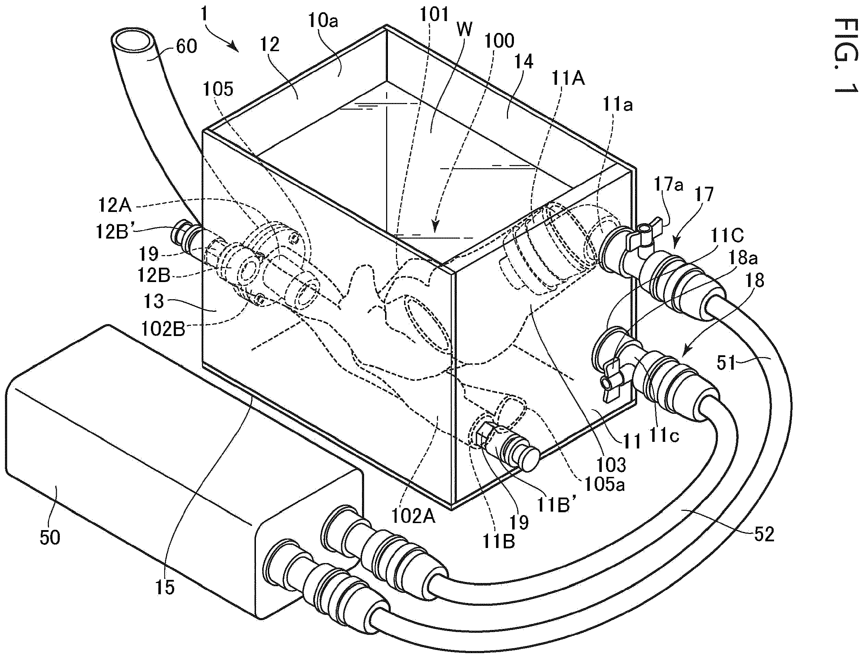

Fig. 1 is a diagram illustrating an embodiment of a catheter simulator according to the present invention and a heart model used therein.

The catheter simulator 1 according to the present embodiment is configured to be suitable for practicing a surgery using a catheter (mainly, percutaneous mitral valve clipping technique) for a heart valve disease related to the mitral valve, as will be described below.

The catheter simulator 1 includes a container 10 that accommodates a heart model 100, and a pump (pulsatile flow generating pump) 50 that circulates a liquid in a state in which the container 10 is filled with a liquid W such as water. The catheter simulator 1 is configured such that a liquid is circulated in the heart model 100 installed in the container 10, and a mitral valve is opened or closed so that the liquid flowing from a left atrium to a left ventricle through the mitral valve is equivalent to the flow of blood in the actual heart. For this reason, the pump 50 is configured to be intermittently driven so as to cause a pulsatile flow for the liquid filled in the container 10.

Incidentally, when an assumable pulsation of the human body is taken into consideration, a heart rate of 20 to 200 bpm (beats per minute) is sufficient. In actual heart surgeries, since it is conceived that most of the surgeries are performed at a heart rate in the range of about 40 to 100 bpm, the pump 50 may be configured to have a capacity to generate a pulsatile flow of 20 to 200 times per minute, and when a pulsatile flow of at least 40 to 150 times per minute can be produced, it is possible to perform an effective simulation.

As described above, the inventors of the present invention have proposed a four-cavity model, a coronary artery model, and a TAVI (Transcatheter Aortic Valve Implantation) model as heart models in a previous patent application, PCT/JP2016/057000. These heart models are formed from materials having elasticity close to that of the actual human heart, for example, PVA (polyvinyl alcohol), polyurethane, an epoxy resin, an unsaturated polyester, a phenol resin, silicon, materials similar to these, and other thermosetting resins and thermoplastic resins, which are used singly or in combination of a plurality of the materials, so that catheter manipulation is practiced with a tactile sensation close to that of human organs.

The heart model 100 according to the present invention is configured in a dedicated form with which catheter maneuvers related to the mitral valve, which cannot be practiced in the above-described known heart models, can be practiced. Preferably, the heart model 100 is formed by using a material similar to that of the above-described heart models, so that during a simulation, a feeling of touch at the time of a catheter manipulation close to reality can be obtained. In this case, with regard to the color of the heart model 100, the inner part may be made visually not recognizable by adopting the same color as that of an actual heart, so that the trainee can perform a simulation while irradiating X-rays and observing a monitor. Alternatively, the heart model 100 may be produced to have a transparent or translucent color so that the trainee can perform a simulation while observing the movement of a catheter, a guide wire, and other devices to be inserted, directly by visual inspection. Incidentally, even though the trainee forms a heart model with a material that is visually recognizable, when the container 10 is covered with a cover or the like so as to make the heart model not visible to the trainee, it is also possible to grasp the behavior of the catheter only on the monitor through X-ray fluoroscopy.

It is preferable that the heart model 100 of the present invention is integrally formed without any artificial seams. As a result, the occurrence of a flow of a liquid (blood flow) that is not seen in the human body due to seams can be prevented, and at the same time, obstruction of the visual field by seams during catheter insertion can be prevented. In addition, the appearance of unnatural shadows under X-ray fluoroscopy can be avoided. As a method for forming a heart model by using a material that satisfies properties such as described above, for example, it is possible to use an optical shaping method (JP 5236103 B2) invented by the present applicant. When the shaping method is used, a highly accurate heart model for each patient can be formed at relatively low cost in a short period of time, based on the imaging data of a human organ (cardiac CT data). For this reason, it is possible for the trainee to fabricate a patient-specific heart model and receive simulation training for catheter manipulation, in advance of actual surgery. In addition, it is also possible to utilize the catheter simulator according to the present invention as a preliminary preparation prior to actual catheter manipulation, such as selecting and examining a catheter and various devices optimal for the patient before an examination or a surgery.

When the heart model 100 is formed according to the above-described optical shaping method, since a state close to the human body can be reproduced, the surface of the heart model is not smooth and includes fine surface unevenness similarly to the human body. Therefore, even when the heart model is formed by using a transparent or translucent material such as described above, since visible light is diffusely reflected on the surface having surface unevenness, visibility may be deteriorated. In such a case, after the heart model is formed, diffuse reflection can be reduced by coating the surface with the same material to smoothen the surface having surface unevenness, and visibility can be improved.

In the heart model 100 of the present embodiment and the catheter simulator 1 using the heart model, a liquid is circulated in the container 10 by the pump 50, a pulsatile flow is caused to flow inside the heart model 100, and the main body having elasticity repeatedly undergoes expansion and contraction to cause the liquid to flow in the same manner as the blood flow of the actual heart. By circulating the liquid in this way, in a simulation utilizing a contrast medium, it is possible to suppress the contrast medium to stay inside the heart and to grasp the behavior of the catheter on the monitor.

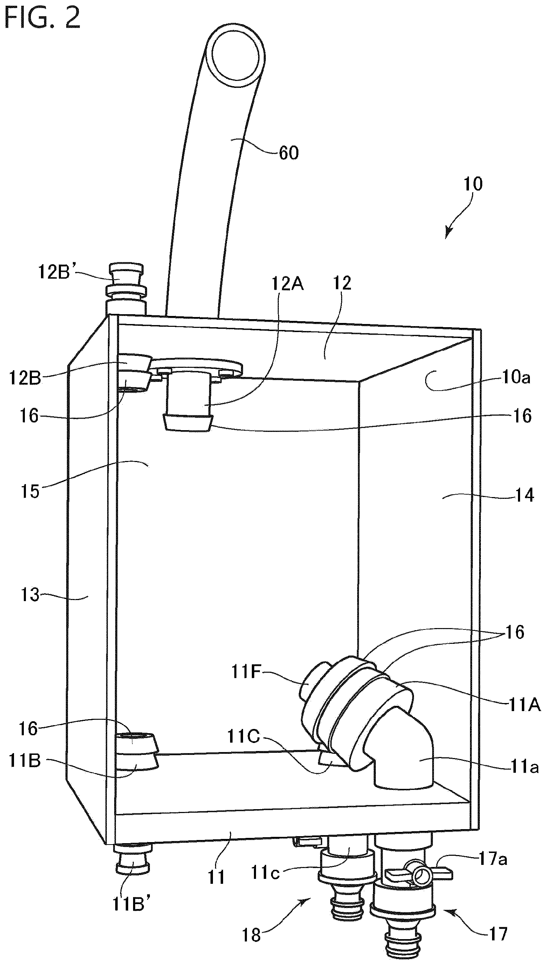

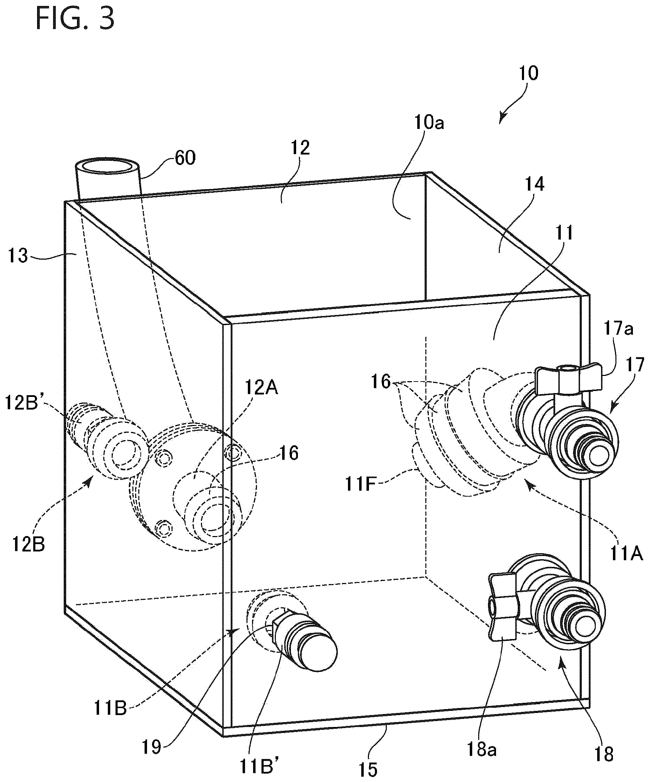

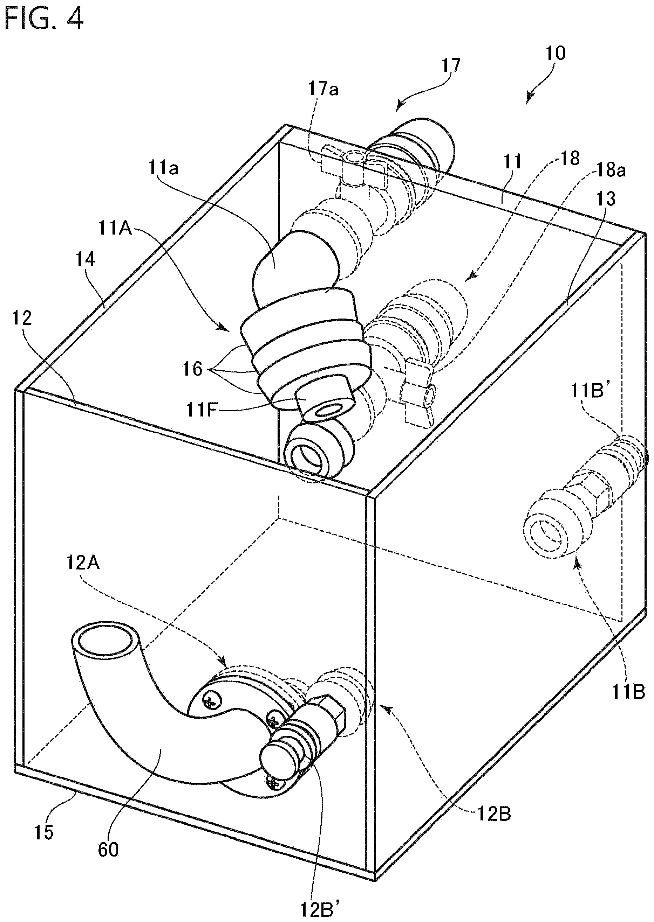

Next, the outline configuration of the container 10 of the catheter simulator in which the heart model 100 is installed, and the heart model 100 will be described with reference to Fig. 2 through Fig. 4 in addition to Fig. 1.

Incidentally, with regard to the heart model 100 that will be described in the following embodiment, the main body of the heart model is configured to include a left atrium, a left ventricle, and a vena cava (superior vena cava and inferior vena cava) that serves as a route through which a catheter approaches a mitral valve, so that the maneuvers of catheterization can be effectively practiced for the mitral valve existing between the left atrium and the left ventricle. That is, the heart model has a form in which the right atrium and the right ventricle are omitted. Of course, it is possible to appropriately modify the heart model to be used by configuring the heart model into a four-cavity type or the like.

The container 10 of the present embodiment includes an accommodation part 10a that accommodates a liquid W such as water or an aqueous electrolyte by means of side walls 11 to 14 of four sides and a bottom face 15. In this case, the side wall 11 corresponds to the lower half body side of the actual human body, and the side wall 12 corresponds to the upper half body side of the actual human body.

On the side wall 11 and the side wall 12, holding parts 11A and 11B and holding parts 12A and 12B are formed, which are capable of holding the heart model 100 in a state in which the accommodation part 10a is filled with a liquid. These holding parts are provided so as to protrude into the accommodation part 10a. For example, by forming the holding parts into a cylindrical shape, cylindrical-shaped parts formed in the heart model 100 (in the present embodiment, cylindrical-shaped connection parts formed in the vena cava, the esophagus, and a cardiac apex that does not exist in the actual heart) can be plugged therein, and the heart model 100 is held in a state of floating inside the container filled with the liquid.

In this case, it is preferable that in each of the holding parts 11A and 11B and the holding parts 12A and 12B, one or more flanges 16 whose diameters decrease toward the tip are formed on the outer peripheral surface of the holding part, and as a result, the holding parts connected to the heart model 100 cannot easily come off so that it is possible to hold the heart model stably.

In the present embodiment, the holding parts 11B and 12B also function as introduction parts through which a catheter is inserted, and the venae cavae (inferior vena cava 102A or superior vena cava 102B) of the heart model 100 are to be each plugged and held therein. For this reason, on each of the holding parts 11B and 12B, an introduction part 11B' or 12B' coaxially protruding out of the container is integrally formed, and an introduction tube of a catheter (not shown in the diagram) is to be connected to each of the introduction parts.

Incidentally, a catheter introduction terminal is provided at the distal end of the introduction tube of the catheter, and the introduction terminal has a function (valve function) of preventing the liquid filled in the introduction tube from leaking to the outside, and also has a structure in which a trainee can introduce a catheter into the introduction tube and withdraw the catheter therethrough.

The holding part 11A has a function as a liquid suction part that is used to circulate a liquid inside the accommodation part to generate a pulsatile flow inside the heart model 100 to be held, particularly in the region extending from the left atrium to the left ventricle, and sucks the liquid inside the accommodation part and sends the liquid to the pump 50. For this reason, a cylindrical-shaped connection part (suction port) 103 that is formed to protrude toward the cardiac apex of the main body 101 of the heart model 100 is connected to the holding part 11A. This connection part 103 is a constituent member that does not exist in the actual heart, and as a suction tube 51 that sucks the liquid with the pump 50 is connected to a suction tube 11a protruding coaxially with the holding part 11A to the outside, a pulsatile flow is to be generated in the internal space of the main body 101 (space extending from the left atrium to the left ventricle).

It is preferably configured such that the suction tube 11a is provided with a connection mechanism 17 at the portion protruding to the outside of the container so that the suction tube 51 can be attached or detached in a one-touch manner. In addition, it is preferably configured such that an on-off valve (not shown in the diagram) is disposed in the flow path of this connection mechanism 17 so that the liquid is prevented from flowing out to the outside by manipulating an opening-closing manipulation member 17a. As a result, the liquid in the accommodation part can be prevented from leaking at the time of attaching or detaching the suction tube 51.

On the side wall 11, a liquid inflow part 11C that pushes out the liquid from the pump 50 into the accommodation part 10a is formed. This liquid inflow part 11C is provided with an inflow protrusion 11c that coaxially protrudes to the outside, and as an inflow tube 52 that pushes out the liquid from the pump 50 side is connected to this inflow protrusion 11c, the liquid inside the accommodation part 10a is configured to circulate passing through the inside of the heart model.

Incidentally, it is preferably configured such that the inflow protrusion 11c protruding to the outside of the container is provided with a connection mechanism 18 as is the case of the suction tube 11a, so that the inflow tube 52 can be attached or detached in a one-touch manner. In addition, it is preferably configured such that an on-off valve (not shown in the diagram) is disposed in the flow path of this connection mechanism 18 so that the liquid is prevented from flowing out to the outside by manipulating an opening-closing manipulation member 18a. As a result, the liquid in the accommodation part can be prevented from leaking at the time of attaching or detaching the inflow tube 52.

The holding part 12A provided on the side wall 12 is provided so that a transesophageal echocardiography examination can be carried out. A transesophageal echocardiography examination is used to observe the heart from the inside by introducing an ultrasonic probe into the esophagus, and this examination enables performing catheter maneuvers while observing the movement of the mitral valve. Therefore, in the main body 101 of the heart model 100 of the present embodiment, an esophagus 105 into which an ultrasonic probe capable of performing a transesophageal echocardiography examination is inserted is formed adjacently to the venae cavae (inferior vena cava 102A and superior vena cava 102B). This esophagus 105 is in a state in which one end is plugged into the holding part 12A and held, and the other end 105a is opened inside the accommodation part. In addition, a tubular-shaped part 60 to insert an ultrasonic probe into the accommodation part is provided on the outer side of the holding part 12A from the container.

The above-described side walls 11 to 14 and the bottom face 15 of the container 10 are formed by using a material having a strength capable of stably accommodating the liquid and the heart model. The container 10 may be formed into a shape that can stably accommodate the liquid and the heart model. In addition, it is preferable that the material of the side walls 11 to 14 and the bottom face 15 constituting the container has transparency. As the side walls and the bottom face have transparency, it is possible to observe the behavior of the heart model installed inside the container 10, a catheter to be inserted from the outside of the container 10, and the like by visual inspection during a simulation. Examples of a transparent material having such strength include acryl, polycarbonate, PET, and polystyrene.

Incidentally, even in a case where the container 10 is formed from a material that can be visually recognized by a trainee, when a camera is installed to display the data on a monitor or the like, or when X-ray fluoroscopy is performed to display the data on a monitor or the like, a simulation for grasping the behavior of the catheter only on the monitor can be performed, and it is also possible to realize a state closer to the reality. The use of visual inspection, checking of monitor display, or X-ray imaging can be selected according to the stages and contents of training.

The upper part of the container 10 is opened, and a lid that is openable or closable may be disposed thereon. As a result, when doing preparation or cleanup for training, such as an operation of filling the accommodation part 10a with a liquid, or an operation of installing a heart model in the liquid, the operations can be carried out efficiently through the opening at the top face of the container. In addition, by making the lid transparent, it is possible to prevent dust from entering. Furthermore, it is also possible to prevent deterioration of visibility caused by shaking of the liquid surface by bringing the lid into close contact with the liquid surface.

The holding parts 11B and 12B have a function as an introduction part for a catheter in addition to a function of holding the heart model. For this reason, a communication hole through which a catheter is inserted is formed at each of the holding parts 11B and 12B. In addition, an introduction tube for introducing a catheter to be manipulated by a trainee from the outside of the container 10 is connected to each of the introduction parts 11B' and 12B', which protrude to the outside coaxially with the holding parts 11B and 12B, respectively. This introduction tube includes a connection mechanism that can be manipulated from the outside of the container 10, and for example, the connection mechanism has a structure in which when the introduction tube is plugged into the introduction parts 11B' or 12B', and a manipulation member (a nut or the like) 19 is rotated, the introduction tube can be fixed or released, so that a manipulation of attaching or detaching the introduction tube can be easily carried out.

In an actual simulation, the accommodation part 10a is filled with a liquid W, and the heart model 100 is installed in a state of floating in the liquid. When the heart model 100 is in a floating state, the trainee can obtain a feeling of touch closer to reality at the time of catheter manipulation. Incidentally, in addition to the above-described holding parts, for example, a dedicated holder may be installed at the bottom face of the container so as to support the heart model 100 from below and hold the heart model 100 in the liquid.

Since the elements accommodated in the container 10 are limited only to a heart model having the same size as that of the human heart and a liquid allowing the heart model to float therein, the container 10 can be miniaturized. The external dimensions of the container 10 according to the present embodiment are about 20 cm × 20 cm × 15 cm, and the amount of the liquid (water) required for filling the container is approximately limited to about 3 L to 6 L. When the container 10 is miniaturized, waste of space in the place where the simulation is performed can be eliminated, and the storability and transportability of the container 10 and the catheter simulator using the container 10 can be improved. In addition, since the amount of water to be filled in the accommodation part 10a of the container is limited to about 6 L, even at a place where tap water cannot be utilized, simulation can be performed by transporting water in a tank or the like, and the range of selection for the place of implementation is broadened. Furthermore, since the weight of the container filled with water is so light that the trainee can handle the container alone, preparation and cleanup of the simulation can be easily carried out even without an assistant.

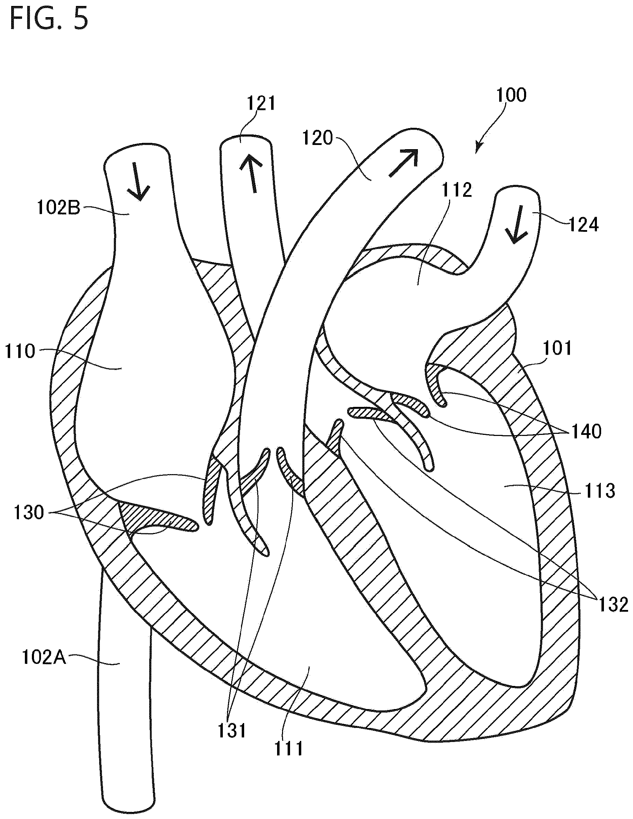

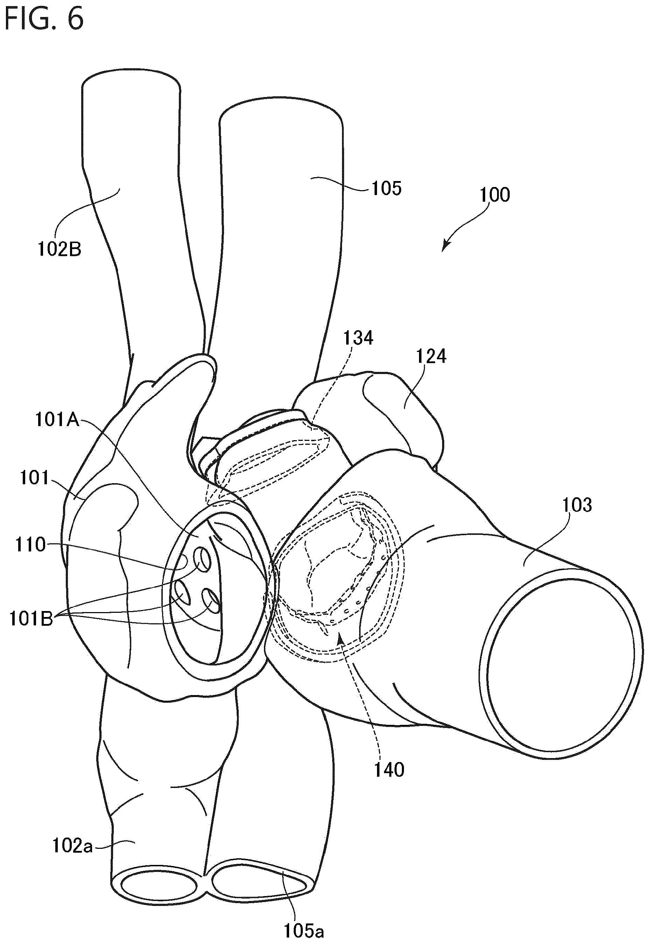

Next, a specific configuration of the heart model 100 according to the present embodiment will be described with reference to Fig. 5 and Fig. 6. With regard to these diagrams, Fig. 5 is a schematic diagram illustrating the structure of a general heart (actual heart), and Fig. 6 is an overall diagram illustrating an embodiment of the heart model according to the present invention. Incidentally, in the following description, with regard to the actual heart and the heart model of the present embodiment, the same constituent element will be assigned with the same reference numeral.

As is well known, the inside of the main body 101 of the heart model 100 includes four chambers, namely, a right atrium 110, a right ventricle 111, a left atrium 112, and a left ventricle 113. Venae cavae (inferior vena cava 102A and superior vena cava 102B) extend from the right atrium 110, and a pulmonary artery 120 extends from the right ventricle 111. The inferior vena cava 102A of the heart model of the present embodiment is connected to the holding part 11B (introduction part 11B') formed in the container 10 and serves as an introduction port for a catheter. In addition, the superior vena cava 102B of the heart model is connected to the holding part 12B (introduction part 12B') formed in the container 10 and serves as an introduction port for a catheter.

Incidentally, in the actual human body, the inferior vena cava 102A reaches the femoral vein running through the groin and serves as an introduction path for a catheter that is introduced through the groin (base of a leg). In addition, the superior vena cava 102B reaches the internal jugular vein running through the base of the neck and serves as an introduction path for a catheter. That is, the catheter may approach the mitral valve through the inferior vena cava 102A or may approach the mitral valve through the superior vena cava 102B. For this reason, as shown in Fig. 6, in the main body 101 of the heart model 100, the inferior vena cava 102A and the superior vena cava 102B are formed so as to protrude from the main body 101 as simulated blood vessel passages, similarly to the actual heart.

In the main body 101, the left atrium 112 and the venae cavae 102A and 102B (right atrium 110) are formed adjacently to each other, with a partition wall 101A interposed therebetween, and it is preferable that an opening 101B through which a catheter is inserted is formed in this partition wall 101A.

In a catheter surgery for the actual mitral valve, the way of approaching a catheter to the left atrium 112 through the inferior vena cava 102A or the superior vena cava 102B is adopted, and at this time, the partition wall 101A between the right atrium 110 and the left atrium 112 is penetrated through by the tip of the catheter. When such a manipulation is repeated, the partition wall portion is damaged, and therefore, by having an opening 101B formed in the partition wall 101A as described above, the heart model can be prevented from being damaged even when practice is repeated.

In addition, in the actual heart, a tricuspid valve 130 exists between the right atrium 110 and the right ventricle 111, and a pulmonary valve 131 exists between the right ventricle 111 and the pulmonary artery 120. Furthermore, an aortic valve 132 exists between the left ventricle 113 and the aorta 121, and a mitral valve 140 exists between the left atrium 112 and the left ventricle 113. Since the heart model 100 of the present embodiment is configured to perform catheter treatment for the mitral valve 140, the heart model 100 has a structure in which elements that are not necessary on the occasion of performing a simulation, specifically, the tricuspid valve 130, the pulmonary valve 131, the aortic valve 132, as well as the right ventricle 111 and the pulmonary artery 120 as shown in Fig. 5 have been omitted.

Incidentally, at the site where the aortic valve 132 exists, an aortic lid 134 is installed to bring a state in which the aorta 121 is occluded. In addition, a pulmonary vein 124 may be omitted, or an opening may be formed in this portion to form a flow path for circulating a liquid into the heart model. Of course, the heart model may also be a heart model in which the above-described omitted parts are formed in the main body 101, similarly to the actual heart.

As mentioned above, at the cardiac apex (lower end on the left ventricle side) of the main body 101 of the heart model 100, a connection part (suction port) 103 that does not exist in the actual heart is formed. When this connection part 103 is connected to the holding part 11A of the container 10, and this portion is subjected to a sucking action by the pump 50, the liquid present in the space extending from the left atrium 112 to the left ventricle 113 is subjected to a sucking action, and a pulsatile flow flows in the main body. Incidentally, it is possible to configure the inflow path of the liquid to the left atrium 112 to include a pulmonary vein 124 joined to the left atrium 112, the above-described opening formed in the aortic lid 134, the opening 101B through which the catheter is inserted, and the like.

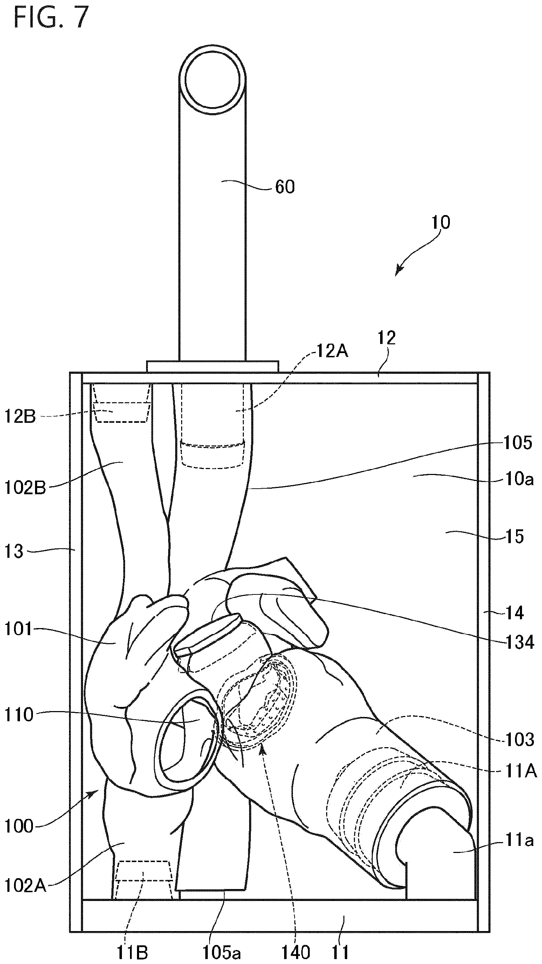

Fig. 7 is a plan view illustrating a state in which the heart model 100 shown in Fig. 6 is installed inside the container 10. The heart model 100 is held as the connection part 103 and the inferior vena cava 102A are inserted into the holding parts 11A and 11B, respectively, provided on the side wall 11 of the container, which corresponds to the lower half body side. In addition, the heart model 100 is held as the esophagus 105 and the superior vena cava 102B are inserted into the holding parts 12A and 12B, respectively, provided on the side wall 12 of the container, which corresponds to the upper half body side.

As described above, when the liquid from the connection part 103 is subjected to a sucking action by the pump 50, the liquid flows from the left atrium 112 to the left ventricle 113 through the mitral valve 140. In this case, it is preferable that the connection part 103 or the holding part 11A is produced into a shape whose diameter gradually decreases toward the pump side. By adopting such a shape, when the heart model is subjected to a sucking action by the pump 50, a sufficient suction force acts, and a stable flow of the liquid from the left atrium 112 to the left ventricle 113 is realized.

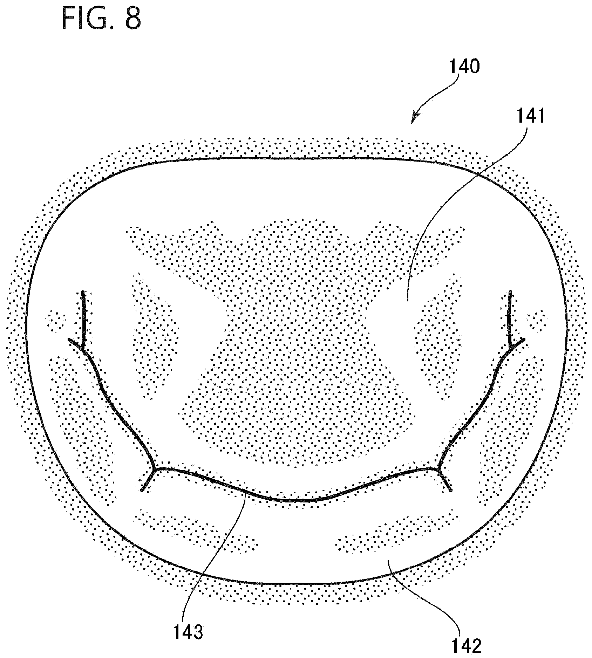

Next, the structure of the mitral valve 140 present between the left atrium 112 and the left ventricle 113 will be described with reference to Fig. 8 through Fig. 16.

Fig. 8 is a plan view showing the mitral valve 140 existing in the actual heart as viewed from the left atrium side.

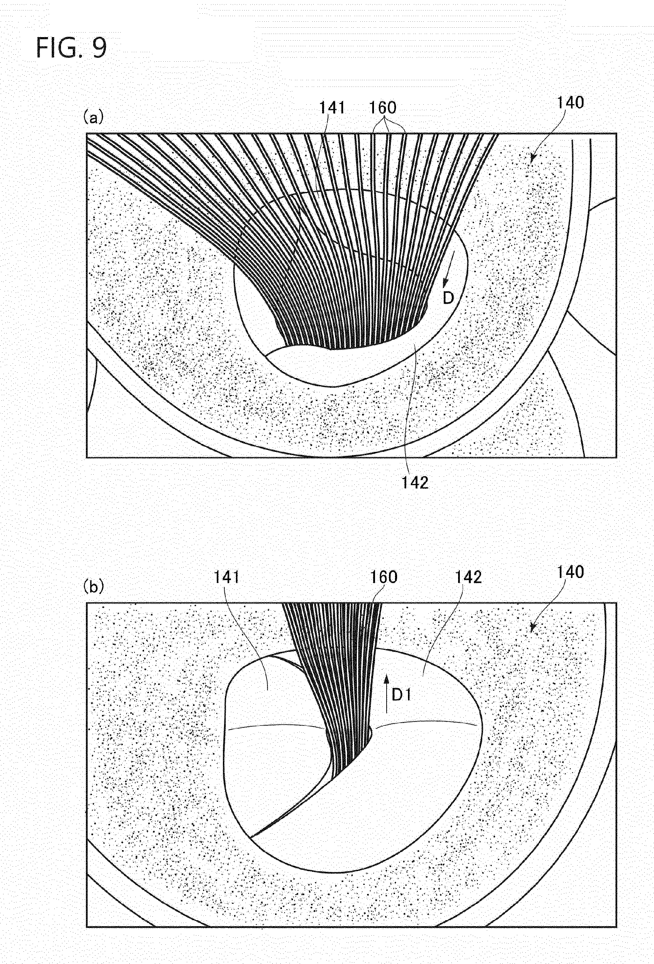

The mitral valve 140 has a function of maintaining the blood to always flow in one direction (from the left atrium to the left ventricle) and preventing backflow. The mitral valve 140 includes an anterior leaflet 141 and a posterior leaflet 142, and in the stage before the heart expands (systole of the heart), the anterior leaflet 141 and the posterior leaflet 142 are in a state of being closed to be in contact with each other, as shown in Fig. 8. Therefore, blood does not flow through a boundary portion 143 between the anterior leaflet 141 and the posterior leaflet 142. Then, when the heart begins to expand, the anterior leaflet 141 and the posterior leaflet 142 open as shown in Fig. 9(a), and blood 160 flows from the left atrium to the left ventricle (in the direction of arrow D).

Specifically, the anterior leaflet 141 and the posterior leaflet 142 are closed in a state in which the tip sides are bent toward the left ventricle to lie on top of each other, and the back side of each leaflet is in a state of being pulled by the chordae tendineae extending from the papillary muscles of the left ventricle. During the diastole of the heart (ventricle), the anterior leaflet 141 and the posterior leaflet 142 are opened toward the left ventricle by being pulled by the papillary muscles and the chordae tendineae and allow the blood to flow, and during the systole, the anterior leaflet 141 and the posterior leaflet 142 are in a state of being no longer subjected to the pulling caused by the chordae tendineae and thereby being closed, and backflow is prevented.

When mitral valve insufficiency occurs, the anterior leaflet 141 and the posterior leaflet 142 are in a state of not being completely occluded (not in close contact) during the systole of the heart, and as shown in Fig. 9(b), blood 160 backflows from the left ventricle to the left atrium (in the direction of arrow D1). Such backflow of blood causes various heart failures, and for such mitral valve insufficiency, a percutaneous mitral valve clipping technique (a surgical technique using MITRACLIP (registered trademark)) using a catheter is effective. This percutaneous mitral valve clipping technique is a treatment of installing a clip at a tip of a catheter, causing the catheter to approach the inside of the left ventricle through the left atrium side, fitting the clip so as to grasp the anterior leaflet and the posterior leaflet, and improving the state of close contact between the anterior leaflet and the posterior leaflet to suppress the backflow of blood.

In order to practice such a surgical technique effectively, it is important that the anterior leaflet and the posterior leaflet of the mitral valve formed as a model move in the same way as the anterior leaflet and the posterior leaflet of the actual heart, and that the flow of blood is also reproduced similarly. In the present invention, the mitral valve and the flow of a liquid (blood flow) are configured as follows, so that practice similar to an actual catheter treatment can be performed.

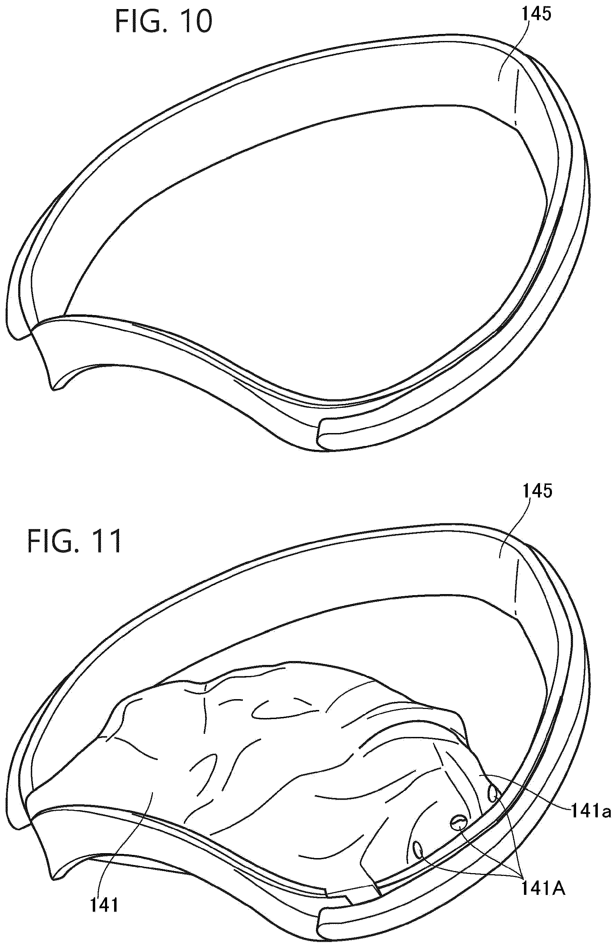

The configuration of the mitral valve (mitral valve model) of the present embodiment will be described below with reference to Fig. 10 through Fig. 14.

The anterior leaflet 141 and the posterior leaflet 142 constituting the mitral valve 140 are mounted on a holder 145 (see Fig. 10) formed in an annular shape. The holder 145 is formed from a material (a hard resin or the like) having higher hardness than the main body 101 of the heart model formed from a flexible material and is configured such that the holder 145 can be fitted without being deformed or the like at a predetermined place (boundary portion between the left atrium and the left ventricle).

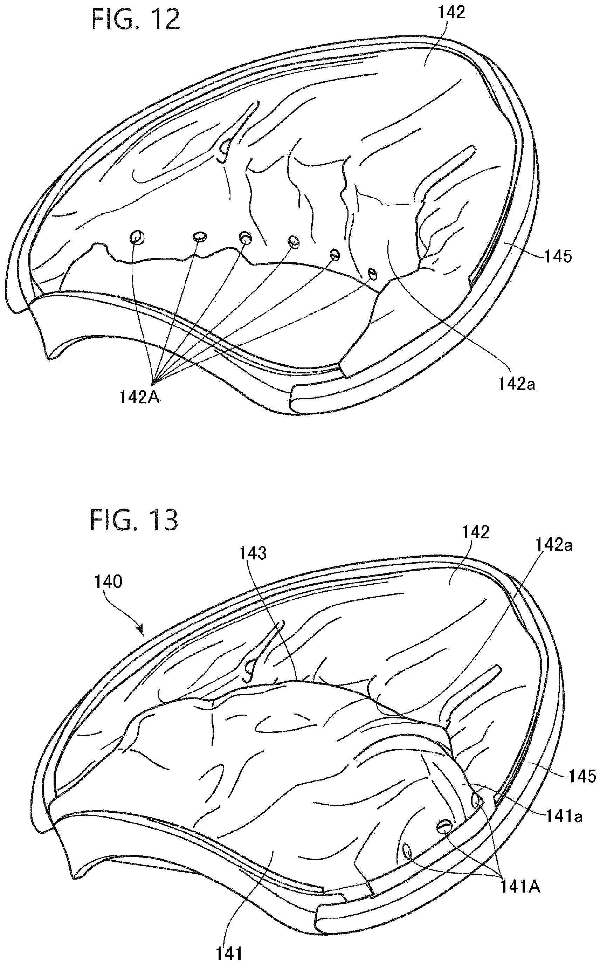

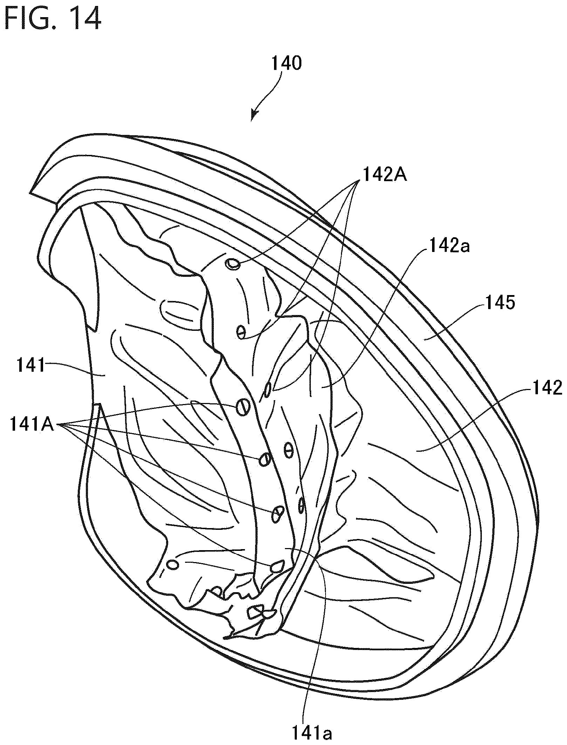

On the holder 145, an anterior leaflet 141 and a posterior leaflet 142, which are each formed as separate bodies, are mounted by adhesion or the like (see Fig. 11 and Fig. 12). The anterior leaflet 141 and the posterior leaflet 142 are formed from a flexible material having a small thickness, and preferably a material more flexible than the main body of the heart model (for example, a latex material), so that the anterior leaflet 141 and the posterior leaflet 142 can be easily displaced along with the flow of a liquid as will be described below. In this case, the anterior leaflet 141 and the posterior leaflet 142 are formed into shapes similar to the anterior leaflet and the posterior leaflet of the mitral valve of the actual heart, and are mounted such that both sides of the posterior leaflet 142 surround the anterior leaflet 141 within the holder 145. In addition, the edges 141a and 142a sides of the anterior leaflet 141 and the posterior leaflet 142 are formed to be bent toward the ventricle side, and both are in close contact in a state of overlapping each other (see Fig. 13 and Fig. 14). As a result, similarly to the configuration shown in Fig. 8, a boundary portion 143 is formed at the inflected edges of the anterior leaflet 141 and the posterior leaflet 142.

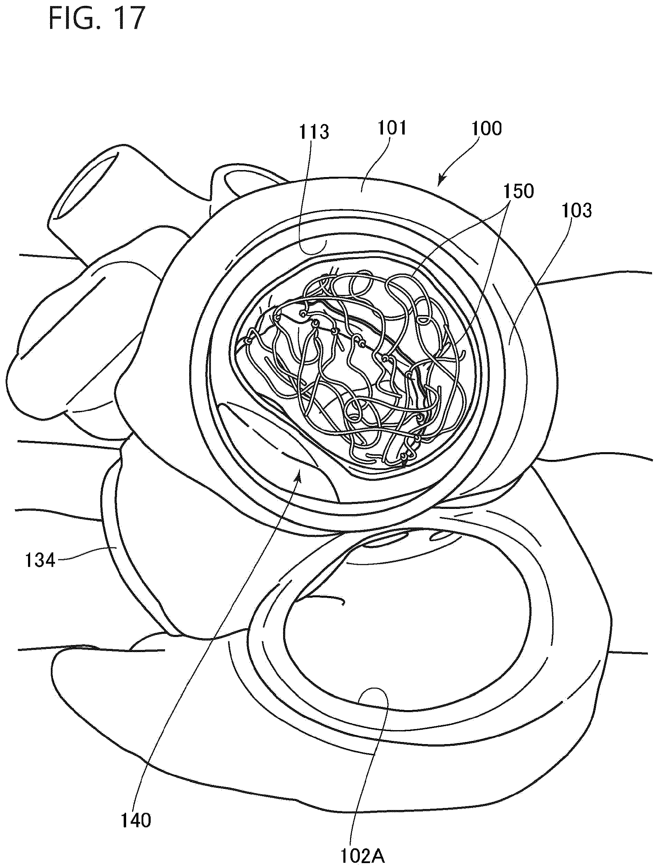

In addition, a plurality of opening holes 141A and 142A are formed at the edges 141a and 142a of the anterior leaflet 141 and the posterior leaflet 142, respectively. One end of each of string-shaped members 150 is fastened to these opening holes 141A and 142A (see Fig. 17), and the mitral valve 140 portion (mitral valve model) is configured in this state. These opening holes may be formed on the edge sides of the anterior leaflet 141 and the posterior leaflet 142, that is, in the portions hanging down toward the left ventricle side, and the number of the opening holes and the state of disposition are arbitrary.

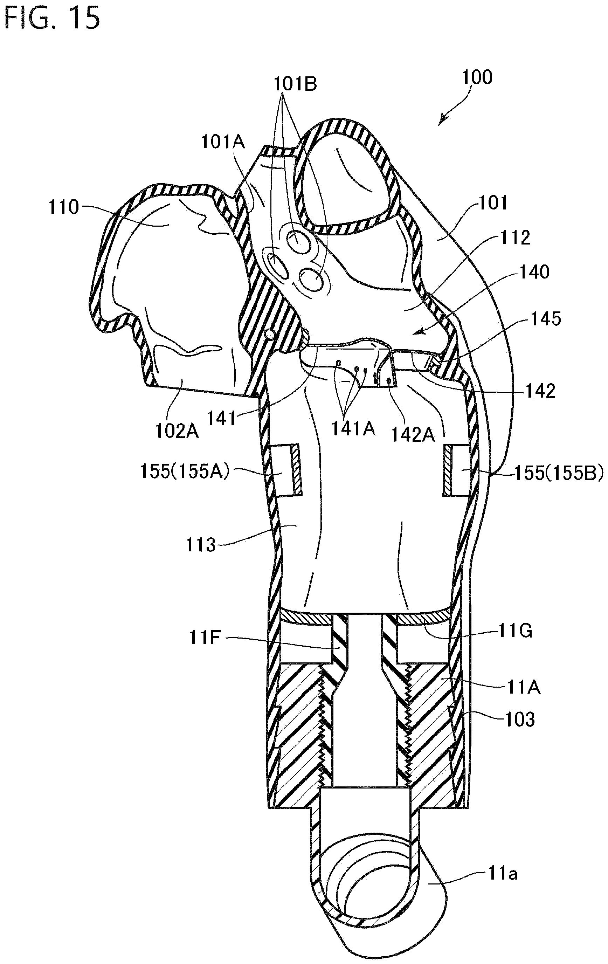

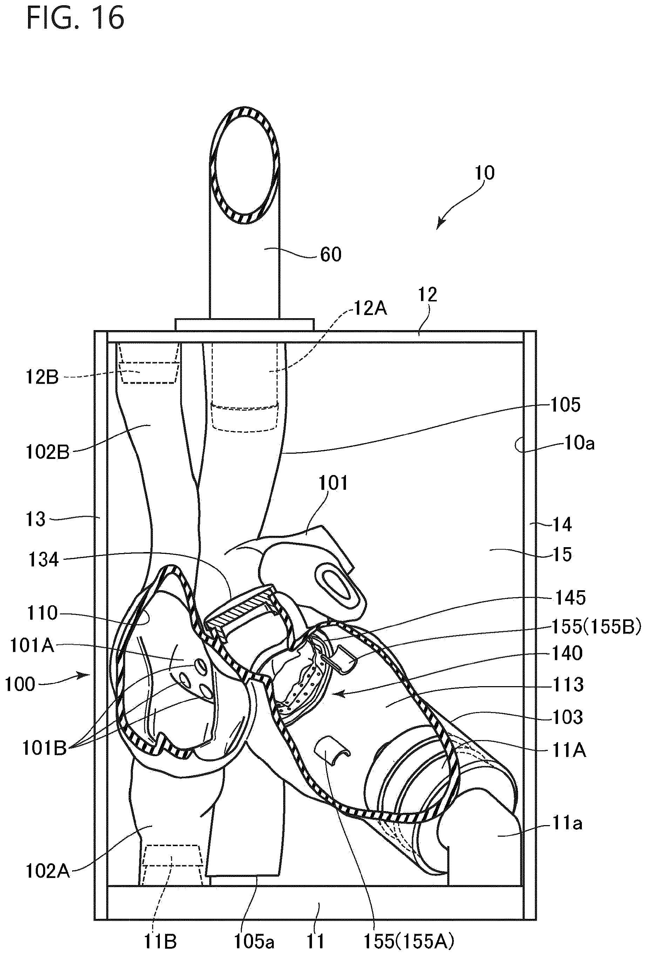

Fig. 15 is a diagram illustrating a state in which the mitral valve shown in Fig. 13 and Fig. 14 is installed in a heart model, and Fig. 16 is a plan view illustrating a state in which a heart model having a mitral valve mounted thereon is attached to the container (these diagrams show a state in which string-shaped members 150 are not fastened to the opening holes 141A and 142A).

As described above, the holder 145 of the mitral valve 140 is formed from a material (a hard resin or the like) having higher hardness than the main body 101 and is configured to be fitted without being deformed or the like at a predetermined place (boundary portion between the left atrium and the left ventricle). Therefore, it is possible to press-fit the holder 145 to the boundary portion between the left atrium 112 and the left ventricle 113 to be fixed thereto. In this case, the holder 145 may be fixed to the boundary portion by adhesion or may be fixed attachably and detachably. Alternatively, the holder 145 may be configured such that an engagement structure such as protrusions and depressions is provided at the boundary portion of the main body 101 so that the holder 145 can be easily attached to and detached from the boundary portion.

In this way, by making the holder 145 attachable and detachable, it is possible to form a mitral valve that is capable of the same opening and closing movement as that in the case of an actual patient, and to incorporate the mitral valve into a heart model to practice catheter manipulations.

In addition, it is preferable that a semicylindrical-shaped member (insertion member) 155, through which the string-shaped members 150 are inserted in a state of being bundled, is fastened to the inner wall of the left ventricle 113.

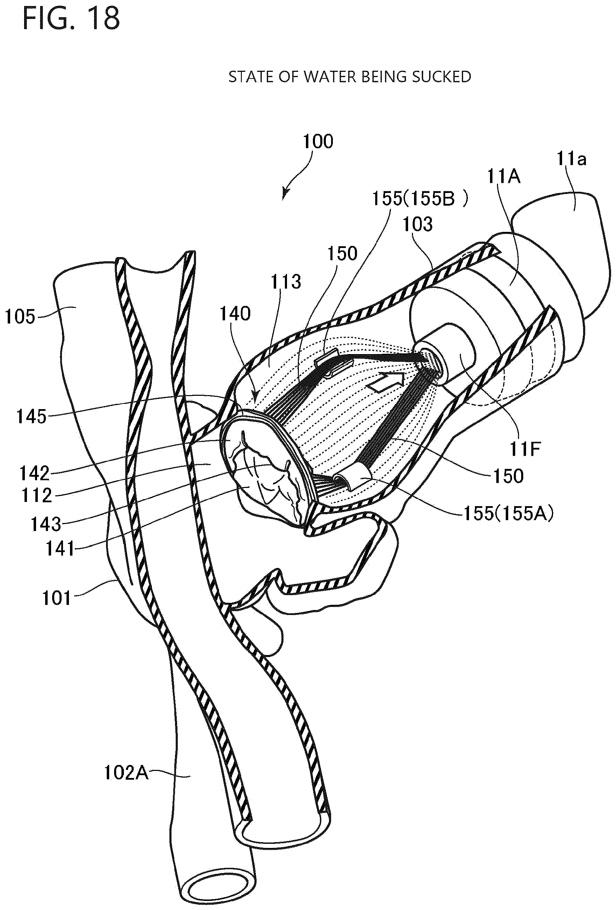

By having such a semicylindrical-shaped member 155 formed therein, the string-shaped members 150 are prevented from being entangled as shown in Fig. 17, and as shown in Fig. 18, appropriately distributed tensile force can be caused to act on the anterior leaflet and the posterior leaflet along the flow of a liquid. Particularly, when the semicylindrical-shaped member 155 is configured such that a semicylindrical-shaped member for anterior leaflet 155A, through which a plurality of string-shaped members provided on the anterior leaflet 141 are inserted, and a semicylindrical-shaped member for posterior leaflet 155B, through which a plurality of string-shaped members provided on the posterior leaflet 142 are inserted, are arranged at positions substantially facing each other, it is possible to cause stable tensile force to act on the anterior leaflet and the posterior leaflet.

Incidentally, such a semicylindrical-shaped member 155 may be provided in the left ventricle at a spot within the range from a position about one-third away from the left atrium to a position in the approximately middle portion, and the string-shaped members 150 may have a length that is sufficient to pass through this semicylindrical-shaped member 155 and terminates in front of the holding part 11A.

According to the above-described configuration of the mitral valve 140, when the region of the left atrium 112 and the left ventricle 113 is subjected to a sucking action by the pump 50, the string-shaped members 150 are caused to move by the flow of a liquid so that the anterior leaflet 141 and the posterior leaflet 142 are pulled toward the ventricle side. That is, the anterior leaflet 141 and the posterior leaflet 142 are subjected to a pulling action similar to the function of the actual chordae tendineae, the mitral valve is opened as shown in Fig. 9(a), and at the same time, the liquid flows from the left atrium 112 to the left ventricle 113 concomitantly with the sucking movement of the mitral valve and can realize a flow similar to the actual blood flow.

In this case, when the string-shaped members 150 are not provided, since the anterior leaflet 141 and the posterior leaflet 142 are not subjected to a tensile action similar to that of the chordae tendineae, it is difficult to realize an opening condition similar to that of the actual mitral valve, such as not sufficiently opening, or opening unnaturally.

Then, when the sucking movement caused by the pump 50 is stopped, the anterior leaflet 141 and the posterior leaflet 142 are no longer subjected to a pulling action from the string-shaped members 150 and tend to return to the original state due to the elastic force of the anterior leaflet and the posterior leaflet (tend to be occluded). This occluded state of the anterior leaflet 141 and the posterior leaflet 142 is an initial state when the anterior leaflet and the posterior leaflet are mounted on the holder. Therefore, when the anterior leaflet 141 and the posterior leaflet 142 are set in a state of being partially separated from the holder in advance, it is possible to realize the actual mitral valve insufficiency.

The open state and the occluded state of the anterior leaflet 141 and the posterior leaflet 142 can be appropriately modified depending on the configuration of the string-shaped members 150 (length, thickness, material, cross-sectional shape, and the like), the position of attachment, and the number of attachments. For example, the string-shaped members can be composed of threads formed by fibers, threads formed from a stretchable material such as rubber, strip-shaped bodies, or the like. Particularly, when a stretchable material is used, the string-shaped members extend in the axial direction during suction, and when suction is stopped, the string-shaped members easily restore the shape due to the elastic force. In this way, it is possible to adjust the opening and closing state of the anterior leaflet 141 and the posterior leaflet 142 by appropriately modifying the configuration of the string-shaped members. In addition, the string-shaped members 150 of the present embodiment are configured to be fastened to the anterior leaflet 141 and the posterior leaflet 142 as separate bodies; however, the string-shaped members 150 may also be configured to be integrally formed with the anterior leaflet and the posterior leaflet.

Furthermore, it is preferable that a valve member (one-way valve) that opens when a liquid is sucked by the intermittent drive and closes when the suction of the liquid is stopped, is disposed in the liquid suction path of the pump 50 (suction path by the suction tube 51).

By installing such a one-way valve, when the suction movement is stopped, and the one-way valve closes, the liquid is slightly pushed back toward the heart model side, and force can be exerted in a direction that closes the anterior leaflet 141 and the posterior leaflet 142. That is, when the liquid is slightly pushed back, a closing force can be exerted to the anterior leaflet 141 and the posterior leaflet 142 in the open state, and movement similar to that of the mitral valve of the actual heart can be easily realized. Incidentally, for example, when an umbrella valve is used as the one-way valve, the flow rate (amount of return) is easily adjusted, and the opening and closing of the anterior leaflet 141 and the posterior leaflet 142 can be more easily adjusted.

In addition, as shown in Fig. 15, it is preferable that the liquid suction part (holding part 11A) that performs liquid suction has a connection nozzle 11F that is connected to the connection part 103 formed at the cardiac apex. When a receiving part 11G that has a shape conforming to the inner surface of the connection part 103 formed at the cardiac apex is disposed at this connection nozzle 11F, it is possible to prevent the generation of a gap between the connection part 103 and the connection nozzle 11F while increasing the suction effect, and to realize stable opening and closing of the mitral valve.

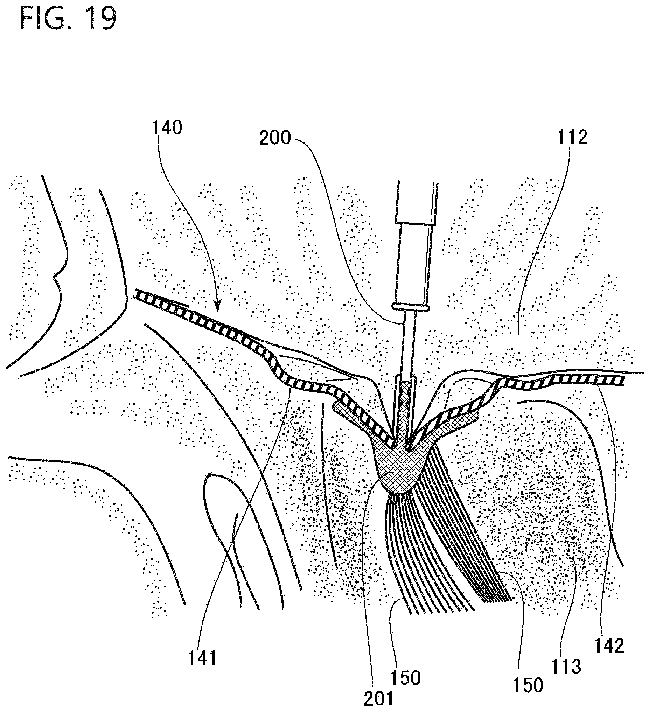

Fig. 19 is a schematic diagram illustrating a state in which a catheter 200 is plugged into a mitral valve 140 with valvular insufficiency, and the approximately central portion of the mitral valve is clipped, and Fig. 19 shows an outline of the surgical technique using a percutaneous mitral valve clipping technique (MITRACLIP (registered trademark)).

In a heart model 100 in which a mitral valve 140 as described above is installed, the anterior leaflet 141 and the posterior leaflet 142 perform opening and closing movement similar to that of the actual heart, along with the intermittent suction drive of the pump 50. In this case, the anterior leaflet 141 and the posterior leaflet 142 with valvular insufficiency as described above are subjected to a manipulation of approaching the catheter 200 through the left atrium side, passing a clip 201 locked at the tip of the catheter through an overlapping portion of the edge 141a of the anterior leaflet 141 and the edge 142a of the posterior leaflet 142, and clipping both the edges while pulling out the catheter as it is.

As described above, since the anterior leaflet 141 and the posterior leaflet 142 are each provided with string-shaped members, and the actual blood flow and valvular insufficiency state can be reproduced substantially accurately by performing a suction manipulation of the liquid from the cardiac apex side, it is possible to practice catheter manipulation in a state equivalent to a practical state, with a simple configuration. That is, the percutaneous mitral valve clipping technique can be practiced in a state close to the movement of the actual heart, with a simple configuration.

Embodiments of the catheter simulator, the heart model, and the mitral valve model according to the present invention have been described above; however, the present invention is not intended to be limited to the above-described embodiments, and various modifications can be made. For example, the opening and closing of a valve is not necessarily limited to the suction drive from the cardiac apex, and it is also possible to realize the opening and closing by drive by inflow from the left atrium side. Furthermore, when performing maneuvers for inserting a catheter through the cardiac apex, it is possible to perform similar maneuvers by flexibly changing the inflow path in this way, without significantly changing the configuration of the instrument used.

### EXPLANATIONS OF LETTERS OR NUMERALS

- 1: CATHETER SIMULATOR
- 10: CONTAINER
- 10a: ACCOMMODATION PART
- 11A, 11B, 12A, 12B: HOLDING PART
- 11C: LIQUID INFLOW PART
- 50: PUMP
- 51: SUCTION TUBE
- 52: INFLOW TUBE
- 100: HEART MODEL
- 101: MAIN BODY
- 102A: INFERIOR VENA CAVA
- 102B: SUPERIOR VENA CAVA
- 103: CONNECTION PART
- 105: ESOPHAGUS
- 112: LEFT ATRIUM
- 113: LEFT VENTRICLE
- 140: MITRAL VALVE
- 141: ANTERIOR LEAFLET
- 142: POSTERIOR LEAFLET
- 145: HOLDER
- 150: STRING-SHAPED MEMBER
- 155 MEMBER): SEMICYLINDRICAL-SHAPED MEMBER (INSERTION
- 200: CATHETER
- 201: CLIP

## Claims

1. A heart model comprising:
a main body formed from an elastic material and including a left atrium and a left ventricle, with a mitral valve installed at a boundary portion between the left atrium and the left ventricle; and
a vena cava provided in the main body,
wherein the mitral valve has an anterior leaflet and a posterior leaflet, both the leaflets extending to the left ventricle side and capable of opening and closing, and
the anterior leaflet and the posterior leaflet are each provided on a tip side with a plurality of string-shaped members extending into the left ventricle.

2. The heart model according to claim 1, wherein a plurality of opening holes are formed along tip edges of the anterior leaflet and the posterior leaflet, and
each of the string-shaped members has one end thereof fastened to one of the opening holes.

3. The heart model according to claim 1, wherein the string-shaped members are formed from a stretchable material.

4. The heart model according to claim 1, wherein the anterior leaflet and the posterior leaflet are held by a holder, and
the holder is installed at a boundary portion between the left atrium and the left ventricle.

5. The heart model according to claim 4, wherein the holder can be attached to and detached from the boundary portion between the left atrium and the left ventricle.

6. The heart model according to claim 1, wherein an insertion member for inserting the string-shaped members therethrough in a bundled state, is fastened to an inner wall of the left ventricle.

7. The heart model according to claim 6, wherein the insertion member includes an insertion member for anterior leaflet for inserting therethrough a plurality of string-shaped members provided on the anterior leaflet, and an insertion member for posterior leaflet for inserting therethrough a plurality of string-shaped members provided on the posterior leaflet.

8. The heart model according to claim 1, wherein a connection part connectable to a liquid suction part is formed at a cardiac apex of the left ventricle of the main body.

9. The heart model according to claim 1, wherein in the main body, the left atrium and the vena cava are formed adjacently to each other, with a partition wall interposed therebetween, and
an opening for inserting a catheter therethrough is formed in the partition wall.

10. The heart model according to claim 1, wherein in the main body, an esophagus for inserting a transesophageal echocardiography is formed adjacently to the vena cava.

11. A mitral valve model installed at a boundary portion between a left atrium and a left ventricle of a heart model, and comprising an anterior leaflet and a posterior leaflet formed from flexible members, with edge sides thereof bent to lie on top of each other,
wherein the anterior leaflet and the posterior leaflet are mounted on a holder formed from a hard material harder than the material constituting the heart model, and
the anterior leaflet and the posterior leaflet are each provided on the edge side with a plurality of string-shaped members.

12. The mitral valve model according to claim 11, wherein a plurality of opening holes are formed on the edge sides of the anterior leaflet and the posterior leaflet, and
the string-shaped members are fastened to the opening holes.

13. A catheter simulator for practicing catheter manipulations in a state of holding a heart model in a container filled with a liquid,
the heart model having a main body formed from an elastic material and including a left atrium and a left ventricle, with a mitral valve installed at a boundary portion between the left atrium and the left ventricle, the mitral valve having an anterior leaflet and a posterior leaflet, both the leaflets extending toward the left ventricle side and being capable of opening and closing, and the anterior leaflet and the posterior leaflet being each provided on the tip side with a plurality of string-shaped members extending into the left ventricle,
wherein the container has a holding part for holding the heart model, and an introduction part capable of inserting a catheter,
a pump for circulating the liquid to be filled in the container into the heart model is connected to the container,
the pump is intermittently driven so that a pulsatile flow flows from the left atrium toward the left ventricle in the heart model held in the container, and
a catheter surgery on a mitral valve using a catheter can be practiced against the anterior leaflet and the posterior leaflet of the heart model held by the holding part.

14. The catheter simulator according to claim 13, wherein the introduction part constitutes a holding part for holding a vena cava formed in the main body.

15. The catheter simulator according to claim 13, wherein the container is provided with a liquid inflow part for allowing a liquid pushed out from the pump to flow into the container, and a liquid suction part for sucking the liquid in the left atrium and the left ventricle and sending the liquid to the pump, and
a connection part connectable to the liquid suction part is formed at a cardiac apex of the left ventricle of the main body.

16. The catheter simulator according to claim 15, wherein in a liquid suction path for sucking a liquid using the pump, a one-way valve is disposed, and the one-way valve opens when the liquid is sucked by the intermittent drive and closes when the suction of the liquid is stopped.

17. The catheter simulator according to claim 15, wherein the liquid suction part has a connection nozzle for connecting with a connection part formed at the cardiac apex, and
a receiving part having a shape conforming to an inner surface of the cardiac apex is disposed so as to prevent the occurrence of a gap between the connection part formed at the cardiac apex and the tip of the connection nozzle.
